# DEMANDE DE BREVET EUROPEEN

(11) **EP 1 377 068 A2**
(43) Date de publication de la demande: **02.01.2004**
(21) Numéro de dépôt: 03354061.8
(22) Date de dépôt: 26.06.2003
(51) Int. Cl.: H04N 7/26

(54) **Procédé d'insertion de messages binaires dans des images vidéo**

(30) Priorité: 28.06.2002 FR 0208114
(71) Demandeur: STMicroelectronics S.A., 92120 Montrouge (FR)
(72) Inventeur: Petitjean, Guillaume, 13530 Trets (FR)
(74) Mandataire: de Beaumont, Michel

(57) **Abrégé**

L'invention concerne un procédé et un circuit de marquage par code binaire d'une séquence vidéo compressée par calcul de mouvement, d'une image à une autre, de macroblocs divisant chaque image, les images numériques étant reparties en au moins deux catégories (I, P, B) selon qu'elles sont codées intégralement ou par les vecteurs de mouvement (MV) des macroblocs par rapport à l'image précédente ou aux images précédente et suivante, le procédé consistant, au moins pour les images (P, B) codées par des vecteurs de mouvement, à ne marquer que les macroblocs pour lesquels les vecteurs de mouvement sont supérieurs à un seuil prédéterminé (TH).

## Description

La présente invention concerne l'insertion de codes ou messages binaires d'identification ou d'authentification dans des images numériques animées et, plus particulièrement, dans des images animées comprimées par un calcul de mouvement zone par zone d'une image à l'autre, par exemple selon la norme MPEG2, MPEG4 ou H263.

Un premier exemple d'application concerne l'insertion d'un identifiant du titulaire des droits relatifs à la séquence vidéo pour permettre de détecter un éventuel piratage par distribution de copies illicites. Un deuxième exemple d'application est la protection contre des montages déformant ou falsifiant les images de séquences vidéo, afin de pouvoir garantir l'intégrité d'un film. Un troisième exemple est l'insertion de droits relatifs à l'utilisation des séquences vidéo (nombre de copies ou d'utilisations possibles).

La technique d'insertion de codes binaires dans des images numériques est généralement connue par son appellation anglo-saxonne "watermarking" et a connu un développement récent avec l'essor des transmissions d'images numériques par internet. Devant le risque grandissant de copies illicites, les titulaires des droits d'auteur notamment ont cherché des moyens pour protéger les contenus multimédias numériques animés.

Les trois exemples ci-dessus concernent des applications dites sécuritaires. On peut également trouver des applications non sécuritaires, par exemple, l'insertion de caractéristiques liées à la prise de vue ou autres informations des images.

Généralement, l'insertion d'un code concerne chaque image de la séquence animée, toutes les images comportant alors une insertion (par exemple, un code d'identification de l'auteur est reproduit dans toutes les images). Le cas échéant, il est possible que le contenu des codes respectifs soit lié à la séquence des images afin de détecter une éventuelle insertion d'image(s) parasite(s).

Quelle que soit l'application, on utilise généralement un algorithme dit de marquage pour crypter et positionner, dans les images, les codes à y insérer. Un algorithme inverse est utilisé pour restituer, selon l'application, les codes d'identification ou les caractéristiques du tournage, etc.

De multiples algorithmes de marquage d'images animées sont connus, par exemple, de la norme ISO/IEC 13818-2 "Generic Coding of Moving Pictures and Associated Audio". La présente invention ne concerne pas l'algorithme de marquage proprement dit et s'applique quel que soit le type d'algorithme utilisé.

La modification ou codage prend souvent la forme d'un bruit spécifique constituant le message caché. Dans le cas d'images animées auxquelles s'applique la présente invention, cet ajout de bruit provoque, surtout si on souhaite une robustesse du marquage requérant un marquage plus important, un scintillement des images qui est en pratique inacceptable.

On pourrait penser ne pas marquer toutes les images afin de réduire la perception par l'oeil humain du scintillement. Toutefois, une telle solution fragiliserait considérablement le marquage, en particulier pour garantir l'intégrité de la séquence des images.

La présente invention vise à proposer une nouvelle solution pour marquer numériquement des images compressées par un calcul de mouvement zone par zone d'une image à l'autre, et plus particulièrement des images codées selon la norme MPEG2 (telle que spécifiée dans les recommandations H262 en 1995 par "International Standard Tutorials"), MPEG4 vidéo ou H263.

L'invention vise notamment à proposer une solution qui ne fragilise pas le marquage, en particulier l'intégrité de la séquence des images vidéo.

Pour atteindre ces objets et d'autres, la présente invention prévoit un procédé de marquage par code binaire d'une séquence vidéo compressée par calcul de mouvement, d'une image à une autre, de macroblocs divisant chaque image, les images numériques étant réparties en au moins deux catégories selon qu'elles sont codées intégralement ou par les vecteurs de mouvement des macroblocs par rapport à l'image précédente ou aux images précédente et suivante, qui consiste, au moins pour les images codées par vecteurs de mouvement, à ne marquer que les macroblocs pour lesquels les vecteurs de mouvement sont supérieurs à un seuil prédéterminé.

Selon un mode de réalisation de la présente invention, on marque tous les macroblocs des images de la première catégorie.

Selon un mode de réalisation de la présente invention, pour les images codées par des vecteurs de mouvement :
on calcule les vecteurs de mouvement (MV) des macroblocs de l'image courante,
on compare la valeur absolue des vecteurs de mouvement par rapport à un seuil prédéterminé ; et
selon que le vecteur de mouvement d'un macrobloc est ou non supérieur audit seuil, on soumet ou non les pixels du macrobloc à un algorithme de marquage.

Selon un mode de réalisation de la présente invention, on calcule une erreur de prédiction de chaque macrobloc qu'il soit ou non soumis à l'algorithme de marquage, préalablement à un codage MPEG par transformation cosinus discrète.

Selon un mode de réalisation de la présente invention, ledit seuil est choisi pour correspondre à un mouvement supérieur à 5 pixels d'une image à la suivante.

Selon un mode de réalisation de la présente invention, l'invention est appliquée à un codage selon une norme MPEG.

L'invention prévoit également un circuit de codage MPEG.

Ces objets, caractéristiques et avantages, ainsi que d'autres de la présente invention seront exposés en détail dans la description suivante de modes de réalisation particuliers faite à titre non limitatif en relation avec les figures jointes parmi lesquelles :
les figures 1A et 1B illustrent, par des vues très schématiques d'images successives d'une séquence vidéo, un mode de mise en oeuvre du procédé selon la présente invention ;
la figure 2 représente un mode de réalisation d'un dispositif de codage vidéo MPEG pour la mise en oeuvre de la présente invention ; et
la figure 3 est un organigramme schématique d'un mode de mise en oeuvre du procédé d'insertion de messages binaires selon la présente invention.

Pour des raisons de clarté, seuls les étapes du procédé et éléments du système qui sont nécessaires à la compréhension de l'invention ont été représentés aux figures et seront décrits par la suite. En particulier, les algorithmes de marquage proprement dits consistant à modifier les secteurs d'image n'ont pas été détaillés et ne font pas l'objet de la présente invention. Celle-ci s'applique quel que soit l'algorithme de marquage utilisé. De plus, les techniques de codage selon la norme MPEG2 sont parfaitement connues et n'ont pas été détaillées.

Une caractéristique de la présente invention est de marquer les images, uniquement dans les régions qui sont modifiées d'une image à la suivante. En d'autres termes, la présente invention prévoit de ne pas marquer les zones immobiles des images. En effet, c'est dans les zones immobiles ou peu mouvantes des séquences animées que le bruit venu de l'ajout du marquage crée la dégradation visuelle la plus importante.

Une autre caractéristique de l'invention est de tirer profit de la technique de codage, par exemple MPEG, pour détecter les zones mobiles et mouvantes des images. En effet, le codage de type MPEG exploite des vecteurs de mouvement de blocs d'une image à la suivante (ou précédente) qui permettent de différencier les zones animées des zones fixes. De façon parfaitement connue, le codage MPEG fait appel à un découpage en blocs de pixels de l'image à coder. Ces blocs de pixels sont appelés macroblocs.

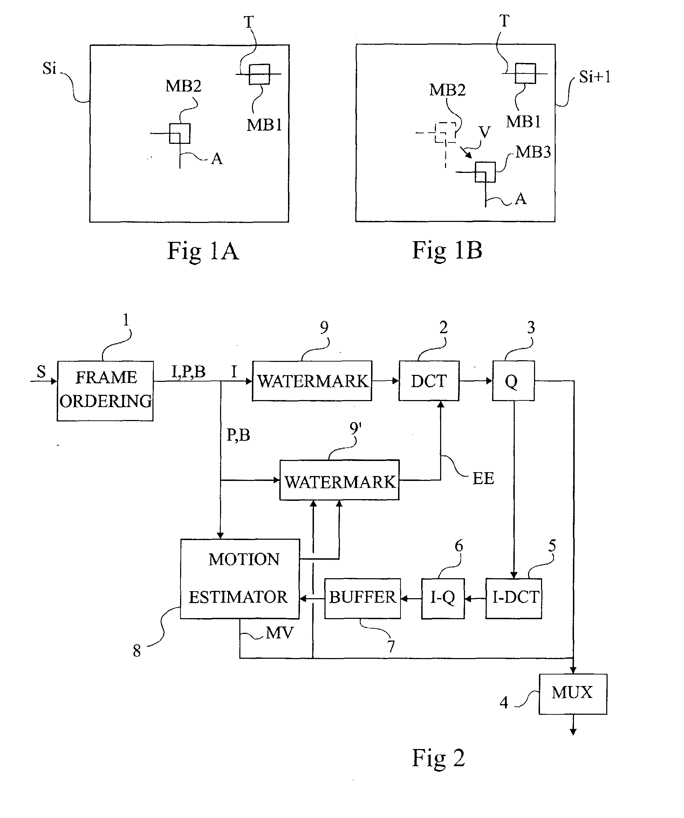

La figure 1A illustre, par une représentation schématique de deux images successives Sᵢ et Sᵢ₊₁, un mode de mise en oeuvre de la présente invention.

En figure 1A, on suppose que l'image Si est constituée d'un trait horizontal T contenu au moins partiellement dans un premier macrobloc B1 et d'un tracé en angle A, au moins partiellement contenu dans un deuxième macrobloc B2.

Dans l'image suivante (Sᵢ₊₁), on suppose que le trait T n'a pas bougé par rapport à l'image précédente et qu'il est donc toujours contenu dans le macrobloc B1. Par contre, l'angle A a changé de place dans l'image et est maintenant contenu dans un macrobloc B3.

De façon simplifiée, le codage MPEG consiste à calculer, pour les macroblocs de l'image suivante qui sont différents par rapport à l'image précédente, des vecteurs de mouvement V qu'il suffit alors de transmettre d'un émetteur à un récepteur pour que ce dernier soit capable de reconstituer l'image Sᵢ₊₁ à partir de l'image Sᵢ, à tout le moins pour ce qui concerne le bloc en mouvement.

Selon l'invention, le bloc B1 de l'image Sᵢ₊₁ ne sera pas marqué (codé par insertion d'un message binaire) de sorte à éviter tout scintillement dans cette zone fixe de l'image. Par contre, le codage sera appliqué au bloc B2 pour lequel le bruit n'est pas visible à l'oeil en raison du mouvement du bloc entre les deux images successives.

La figure 2 représente, sous forme de blocs, un mode de réalisation d'un circuit de codage MPEG adapté pour la mise en oeuvre de l'invention.

De façon classique, les images S sont tout d'abord traitées (bloc 1, FRAME ORDERING) pour être réparties en trois catégories I, P et B, suivant un ordre prédéfini connu par son appellation anglo-saxonne "Group Of Pictures". Une première catégorie (I) est appelée "Intra" et correspond aux images pour lesquelles il convient de transmettre l'intégralité des informations (pixel à pixel) des macroblocs qui les composent. Les deux autres catégories P et B sont appelées "Previous" (précédente) et "Bidirectional" (bidirectionnelle) et correspondent à des images dont les macroblocs sont codés avec référence à d'autres images (précédente pour la catégorie P et précédente et suivante pour la catégorie B) dans le flux vidéo.

Selon l'invention, les images sont marquées différemment selon la catégorie à laquelle elles appartiennent.

Comme les images I sont codées sans référence aux autres images (ce qui correspond à un codage connu sous le nom JPEG), elles sont les moins compressées par la transformation. Selon un mode de réalisation préféré de l'invention, on marque tous leurs pixels, même ceux des zones non mouvantes. En effet, des images I sont généralement très espacées dans le flux vidéo (il n'y a généralement que deux images dans une seconde de flux vidéo). Par conséquent, le fait de marquer aussi les zones non mouvantes ne pose pas de problème de scintillement (il n'y a pas de succession de zones immobiles marquées dans l'affichage).

Pour ce qui concerne les images P et B qui font référence aux images précédentes et éventuellement suivantes, on se contente de marquer les macroblocs de l'image pour lesquels la norme du vecteur de mouvement est supérieure à un seuil prédéterminé.

Comme l'illustre la figure 2, les images I subissent un marquage par un processus en lui-même classique (bloc 9, WATERMARK), puis une transformation cosinus discrète (bloc 2, DCT) suivie d'une quantification (bloc 3, Q) avant d'être multiplexées (bloc 4, MUX) et écrites suivant la bonne syntaxe pour former un flux ou un fichier respectant la norme, par exemple MPEG.

De façon classique, les images Intras (et les images Previous et Bidirectional) peuvent servir de base au codage (calcul des vecteurs de mouvement) des autres images. Pour cela, une sortie du bloc 3 est envoyée sur une transformée inverse (bloc 5, I-DCT) puis sur une quantification inverse (bloc 6, I-Q) afin de mémoriser (bloc 7, BUFFER) l'image codée en amont d'un bloc 8 d'estimation de mouvement (MOTION ESTIMATOR) des macroblocs des autres catégories d'images.

Selon le mode de réalisation représenté en figure 2, on prévoit de ne marquer que les macroblocs mobiles des images Previous P et Bidirectional B. Les vecteurs de mouvement sont calculés comme dans un codeur MPEG2 classique, la sortie du bloc 1 étant reliée en entrée du bloc 8 pour les images P et B. Après ces calculs, le macrobloc considéré est marqué ou non selon la valeur de la norme du vecteur de mouvement (bloc 9', WATERMARK), et ceci avant le calcul de l'erreur d'estimation EE. Ensuite, comme dans un codeur classique, on calcule l'erreur d'estimation et le processus de codage MPEG se poursuit sans autre modification.

Selon l'invention, lorsqu'un bloc a été marqué par un message binaire, il n'est pas nécessaire de recalculer le vecteur de mouvement (MOTION ESTIMATOR 8) dans la mesure où l'ajout du code binaire n'a pas modifié le mouvement de la scène. Il s'agit là d'un avantage important de l'invention dans la mesure où le calcul des vecteurs de mouvement est une des étapes les plus complexes d'un codage MPEG. Il est donc important de ne pas avoir à la refaire. Toutefois, on recalcule l'erreur de prédiction ou d'estimation EE dont chaque macrobloc est la différence entre celui de l'image courante et le macrobloc optimal calculé grâce à l'estimation de mouvement dans l'image de référence. Cette erreur est ensuite transférée au bloc 2 de transformation cosinus discrète comme lors d'un codage MPEG classique. Le recalcul de l'erreur d'estimation n'a pas été représenté en figure 2. Ce recalcul est effectué entre la sortie du bloc 9' et l'entrée du bloc 2 (sur la liaison 10 du bloc 9' au bloc 2).

En variante, les blocs 9 et 9' pourront être confondus en un seul circuit partagé par les chemins respectifs des images I et des images P et B avec des moyens de tri appropriés.

Dans le cas d'un macrobloc d'une image B qui se réfère à la fois à l'image précédente et à l'image suivante, on tient compte préférentiellement du plus grand vecteur de mouvement (en module) entre celui par rapport à l'image précédente et celui par rapport à l'image suivante.

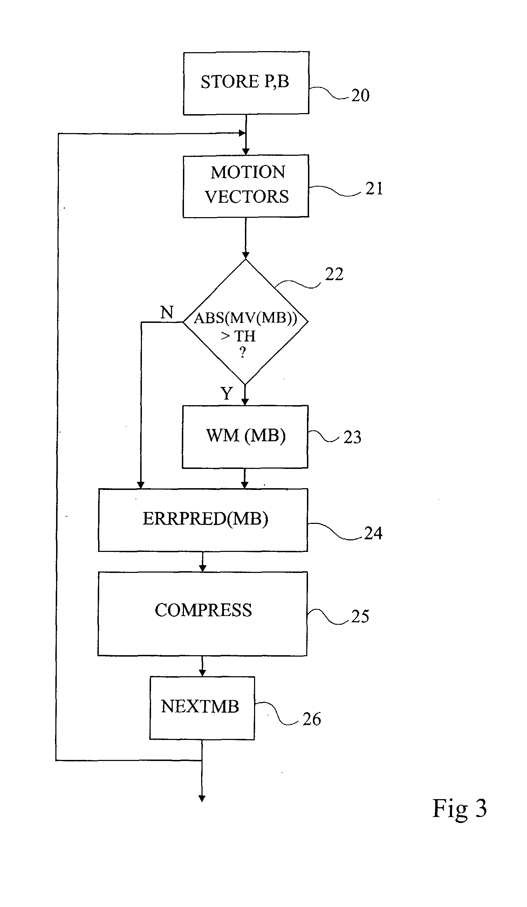

La figure 3 illustre, sous forme d'organigramme, un mode de mise en oeuvre du procédé selon l'invention pour les images de type B ou P. On commence par mémoriser (bloc 20, STORE P, B) les images de type P et B. Puis, on calcule de façon classique (bloc 21, MOTION VECTOR) les vecteurs de mouvement MV respectifs des macroblocs MB de ces images. On compare alors (bloc 22, ABS(MV(MB))>TH ?) la valeur absolue du vecteur mouvement de chaque macrobloc par rapport à un seuil prédéterminé TH pour sélectionner ceux des macroblocs qui vont être marqués. Les macroblocs sélectionnés sont alors soumis à l'insertion de code binaire au moyen d'un algorithme classique (bloc 23, WM(MB)). Puis, on recalcule l'erreur de prédiction (bloc 24, ERRPRED(MB)) comme pour les macroblocs non sélectionnés lors du test 22. L'erreur obtenue est ensuite traitée par compression (bloc 25, COMPRESS) de façon classique. Enfin, on sélectionne le macrobloc suivant (bloc 26, NEXT MB) et l'on revient au calcul de son vecteur mouvement (bloc 21).

Une fois l'image terminée, on passe à l'image suivante du flux fourni par le bloc 1 (figure 2).

La description ci-dessus du procédé de l'invention est une description fonctionnelle. En particulier, différents traitements en parallèle pourront être effectués pourvu qu'ils soient compatibles avec le codage et décodage MPEG classique.

La lecture des informations marquées s'effectue lors du décodage MPEG de façon analogue au procédé de codage. Les images I sont décodées classiquement par un décodeur compatible MPEG et on extrait le marquage dans l'intégralité des images. Pour les images P et B, celles-ci sont décodées mais on ne lit le marquage que dans les macroblocs dont les vecteurs de mouvement excèdent le seuil prédéterminé.

Un avantage de la présente invention est qu'elle permet une insertion de messages binaires dans une séquence d'images vidéo sans pour autant que celles-ci scintillent et tout en insérant, préférentiellement, un marquage dans toutes les images de la séquence.

Un autre avantage de la présente invention est qu'elle est particulièrement simple à mettre en oeuvre en tirant profit des vecteurs de mouvement calculés pour les images codées en MPEG.

Bien entendu, la présente invention est susceptible de diverses variantes et modifications qui apparaîtront à l'homme de l'art. En particulier, celle-ci s'applique de façon générale quel que soit l'algorithme de marquage utilisé.

De plus, la mise en oeuvre de l'invention en utilisant des outils classiques (matériels et/ou logiciels) est à la portée de l'homme du métier à partir des indications fonctionnelles données ci-dessus.

En outre, la fixation du seuil dépend de l'application et, notamment, de la qualité visuelle souhaitée vis-à-vis du scintillement. Par exemple, le seuil TH correspond à un déplacement compris entre 5 et 15 pixels du macrobloc dans l'image.

Enfin, bien que l'invention ait été décrite en relation avec un codage MPEG, elle s'applique plus généralement à toute compression d'images animées pour laquelle les images sont réparties en au moins deux catégories selon qu'elles sont codées intégralement ou par des vecteurs de mouvements de zones de l'image courante par rapport à au moins une image précédente ou aux images précédente(s) et suivante(s).

## Revendications

1. Procédé de marquage par code binaire d'une séquence vidéo compressée par calcul de mouvement, d'une image à une autre, de macroblocs (MB) divisant chaque image, les images numériques (Si) étant reparties en au moins deux catégories (I, P, B) selon qu'elles sont codées intégralement ou par les vecteurs de mouvement (MV) des macroblocs par rapport à l'image précédente ou aux images précédente et suivante, **caractérisé en ce qu'**il consiste, au moins pour les images (P, B) codées par des vecteurs de mouvement, à ne marquer que les macroblocs pour lesquels les vecteurs de mouvement sont supérieurs à un seuil prédéterminé (TH).

2. Procédé selon la revendication 1, **caractérisé en ce qu'**il consiste à marquer tous les macroblocs des images de la première catégorie (I).

3. Procédé selon la revendication 1 ou 2, **caractérisé en ce qu'**il consiste, pour les images codées par des vecteurs de mouvement :
à calculer les vecteurs de mouvement (MV) des macroblocs de l'image courante,
à comparer la valeur absolue des vecteurs de mouvement par rapport à un seuil prédéterminé ; et
selon que le vecteur de mouvement d'un macrobloc est ou non supérieur audit seuil, à soumettre ou non les pixels du macrobloc à un algorithme de marquage.

4. Procédé selon la revendication 3, **caractérisé en ce qu'**il consiste à calculer une erreur de prédiction de chaque macrobloc qu'il soit ou non soumis à l'algorithme de marquage, préalablement à un codage par transformation cosinus discrète.

5. Procédé selon l'une quelconque des revendications 1 à 4, **caractérisé en ce que** ledit seuil est choisi pour correspondre à un mouvement supérieur à 5 pixels d'une image à la suivante.

6. Procédé selon l'une quelconque des revendications 1 à 5, **caractérisé en ce qu'**il est appliqué à des images codées selon une norme MPEG.

7. Circuit de codage MPEG, **caractérisé en ce qu'**il comporte des moyens pour la mise en oeuvre du procédé selon l'une quelconque des revendications 1 à 5.
